# EUROPEAN PATENT SPECIFICATION

(11) **EP 0 797 617 B1**
(45) Date of publication and mention of the grant of the patent: **23.08.2000**
(21) Application number: 95901614.8
(22) Date of filing: 26.09.1994
(51) Int. Cl.: C08J 11/08, C08J 11/06

(54) **METHOD FOR COMPACTING EXPANDED POLYSTYRENE, AND COMPACTED MASS THUS OBTAINED**
VERFAHREN ZUM KOMPAKTIEREN VON EXPANDIERTEM POLYSTYROL UND SO ERHALTENE KOMPAKTE MASSE
PROCEDE DE COMPACTAGE DU POLYSTYRENE EXPANSE ET MASSE COMPACTEE AINSI OBTENUE

(30) Priority: 27.09.1993 NL 9301660
(43) Date of publication of application: 01.10.1997
(73) Proprietor: Van den Wittenboer, Jan, NL-7552 HE Hengelo (NL)
(72) Inventor: Van den Wittenboer, Jan, NL-7552 HE Hengelo (NL)
(86) International application number: PCT/NL94/00232
(87) International publication number: WO 95/09196

(56) References cited:
- EP-A- 0 563 532
- DE-A- 2 303 754
- DE-A- 4 215 113
- FR-A- 2 417 381
- DATABASE WPI Derwent Publications Ltd., London, GB; AN 78-28132A[15] & JP,A,53 023 892 (SEKISUI PLASTICS K.K.) 4 March 1978
- DATABASE WPI Derwent Publications Ltd., London, GB; AN 78-62714A[35] & JP,A,53 085 870 (NIHON KOKAN K.K.) 28 July 1978

## Description

### Field of the invention.

The invention relates to a method of compacting expanded polystyrene (EPS). The compacted mass thus obtained can be stored, transported and processed in a convenient and economical attractive way compared to the voluminous amount of waste from which the compacted mass is obtained.

### Background of the invention.

EPS is originated from the addition of blowing agents to polystyrene (PS) in order to obtain the PS as a foamed structure :
a matrix comprised of fixed or flexible, coherent structural elements of PS that constitute spatial open or closed cells or cavities in which air and/or blowing agents are contained, whether free or entrapped.

EPS has found a widespread use :
. insulation of heat
. absorbtion of noise, vibration and shocks
. light-weight-structured material in sandwichpanels and transport packages
. foamed packaging chips
. etc.

The voluminous nature of EPS, especially in the state of waste, creates a problem in that high logistic costs per ton polymer are involved in handling and transport.
A truckload EPS, having a mean density of 25 kg/m³, only contains 800 to 1000 kg PS.

A reduction of volume, for instance, can be obtained by mechanical means like pressing or treatment between compactor rolls.
This type of equipment, especially the roll compactor, is precious and takes relative large amounts of energy to do the job.
Especially for the elastic types of foam, mechanical systems are performing less efficient.
Furthermore it is difficult to keep polluting blowing agents like pentane from entering the environment during the compacting process.

Another way to defoam EPS is coarse shredding and fluidizing with hot air in which EPS shrivels up to a more or less granular structure.
Such a thermo-mechanical method is also capital and energy intensive.

A more convenient way to solve the problem is the use of certain liquids which, depending upon what is aimed, have different effects upon EPS. Using liquids is a well known art, disclosed in numerous patent applications :
1. **Non-solvers**, at the most, can weaken the bonds in the expanded structure, especially at elevated temperatures, resulting in cellular shrinking without destroying the cellular structure.
   The product is not fluid but remains in a solid state that, after removal of the liquid, can be re-expanded by thermal treatment.
   The speed of shrinking may be impractible low and can be enhanced by adding a very small amount of a solver, preferably up to 2 %, but 5 % at the most in order to remain the cellular structure.
   Such a method is disclosed in DE-A-4215113 (Wolfgang Jasching, 1993).
   In this disclosure the preferred non-solvers are C₅ - C₇ alkanes and C₂ - C₅ mono alkanoles.
2. **Solvers**, without exception, will defoam, liquify and disperse the polymer throughout the whole system volume.
   The obtained solution will increase in polymer concentration as more EPS is added.
   As the polymer concentration increases, the viscosity increases progressively.
   Such solution can be used as adhesive, lute, putty mass or filler binders, depending on the formulation in which such solution is practiced.
   Such methods are disclosed in :
   DE-A-3113125 (Lutz Goldner, 1981) : adhesives.
   Stain remover is used as solver, though not specified 1,1,2 - tri chloro ethylene could be meant.
   DE-A-3741777 (Klaus Gloistein, 1987) : adhesives.
   Disclosure relates to all kinds of styrene based thermo plastic polymers.
   Most classes of solvers are mentioned.
   DE-A-2303754 (Ludwig Zerzog KG, 1974) : adhesives and lutes.
   Chlorinated hydrocarbons are used as solvers.
   JP-A-53023892 (Sekisui Plastics KK, 1978) : adhesives for mineral fillers, porous granules are obtained, used as soil improver.
   As solvers, benzene, toluene, xylene, methylene chloride, ethyl acetate, etc. are mentioned.
   JP-A-53085870 (Nihon Kokan KK, 1978) : impregnating and coating of corrugated cardboard to obtain water resistant and stiffened boxes. Mixed xylene is the preferred solver.

In perspective of reducing the volume of waste EPS for economical storing, transporting and processing of the defoamed mass, the above-mentioned methods, that use liquids have certain drawbacks :
1. The process using non-solvers is to slow to be of practical interest for the purpose of collecting waste EPS if the objective is other than reprocessing towards EPS.
   The application of heated non-solver shortens the processing time but requires additional heating equipment, energy input and enhances the risk of fire hazard.
   Adding small amounts of a solver to the non-solver makes the process applicable at ambient temperature but re-expandability is worsened.
   Since the solid state remains, the compacted mass is not pumpable and can not be filtered to remove contaminants.
2. The process using solvers has other serious drawbacks, namely :
   Logistic planning is difficult since the best moment to collect the liquified mass is when it is at its maximum polymer concentration.
   One needs two tank cars to do the job, or at least a tank car with two separate compartments : one for the collected mass and one for the fresh refill solver.
   The mass has very sticky and adhesive properties which makes the equipment prone to contamination and clogging.
   The viscosity may be excessive for convenient handling if the amount of added EPS surpasses certain limits.
   Pumping around and spraying over a pile of EPS or stirring a tank is difficult , or even impossible, over certain limits of addition.
   Besides, the more EPS is added over time, the slower the process of defoaming.

A particular method is the use of **acetone** as a defoaming liquid for EPS.
Methods that use acetone as a defoaming agent are disclosed in :
FR-A-2417381 (Michel Rueda, 1978) : casting compound with fillers for producing tiles, panels for furniture, ornaments, etc.
Though the preferred agent is a mixture of xylenes (solvers), the use of acetone is recognized as a defoaming agent.
JP-A-59213804 (Sanin Kenetsu Kogy, 1984) : asphalt concrete with mineral fillers. Acetone is proposed as a defoaming agent.
JP-A-54006080 (K. Itoh, 1979) : casting compound with a variety of fillers, used for producing tiles, decorative ornaments, constructive parts, etc..
Acetone is the preferred defoaming agent. Use is made of its solubility in water.
After forming of the product by any suitable means, the product is contacted with water, causing acetone to migrate towards the water phase in order to "dry" and stabilize the product by leaching.
EP-A-0563532 (Jan van den Wittenboer, 1993) : compacting EPS with acetone as a convenient way to collect and transport waste EPS to a processing facility.

This document discloses the existence of a 2-phase system that makes the use of acetone a peculiar method.
When EPS is contacted with acetone, it shrivels up in a very fast rate, and from the very first addition, a remarkable phenomena is observed, namely :
The polystyrene is convened into a compact fluid phase, that is clearly distinct from the bulk of acetone.
This compact phase contains some 45 - 48 % polystyrene and its fluidity is like a slow treacle.
The bulk of acetone remains nearly free of polystyrene, whatever amount of EPS is added, this in contradiction to the use of solvers which, invariably, disperse the polymer through the whole bulk of solvent which, the more EPS is added, increases in concentration and in viscosity.
Because the bulk of acetone remains free of polymer, it can easily be pumped around and sprayed over EPS in order to defoam it, and it keeps its full speed of defoaming over time.

However, the use of acetone has also severe drawbacks, namely :
1 Its use introduces a serious fire hazard that makes its practising at remote locations very difficult, if not prohibitive.
2 Water has an extremely strong influence upon the behavior of acetone as a defoaming agent. A few percent of water in the acetone renders it practically inoperable.
   In practise, this condition can soon be met because of adhering water on the waste EPS.

### Summary of the invention.

**It is discovered that EPS can be compacted by the use of a compacting liquid that has such a composition that EPS shrivels up and is converted into a compact polystyrene-rich fluid mass that is in co-excistance with a polystyrene-lean liquid, both phases having the components of the compacting liquid in common.**

**To obtain this compact mass the compacting liquid is composed of at last one component with solving power in respect of polystyrene end of at least one component without solving power in respect of polystyrene.** The invention for which protection is sought is set out in the appended claims.

### Detailed description of the invention.

The following **definitions** apply to the invention:
1. The phrase "**component with solving power** in respect of a polymer" :
   A component has solving power if, in the liquid state, it weakens the bonds between the molecules of a submerged polymer in such a way that these molecules lose their mutual coherence and as a final consequence a **one-phase system** arises with fluid or semi-fluid properties, in which the **molecules are**, more or less, **homogeneously distributed over the entire system volume.**
   Things to be considered for the temperature range in which the method is applied. **In the examples** "a component with solving power in respect of polystyrene" is simply referred to as "**a solver**".
2. The phrase "**component without solving power** in respect of a polymer" :
   A component has no solving power if, in the liquid state, it is not capable to weaken the bonds between the molecules of a submerged polymer in such a way that these molecules lose their mutual coherence.
   What remains after prolonged time is a **2-phase system comprised of an inactive liquid phase and an unaltered solid phase** that may be somewhat swollen at the most due to the imbibition of liquid molecules in the polymermatrix.
   **In the examples** "a component without solving power in respect of polystyrene" is simply referred to as "**a non-solver**".

It is the **embodiment of the invention** that by a convenient choice of the composing components and their mutual ratios the liquid obtains the following properties :
EPS, contacted with it, shrivels up but does not solve, on the contrary, what arises is **a 2-phase system characterized by the existence of a polystyrene-rich fluid phase that is very strongly reduced in volume, which phase has a consistancy varying from a heavy syrup, over a treacle, towards a paste or dough** and that doesn't take up more liquid than necessary for the existence of said phase **and by the existence of a polystyrene-lean liquid phase that, more or less, keeps** **the full power of absorbing freshly added EPS in an unaltered fast rate.**

Obviously there is a triangular interaction between polymer, solver component(s) and non-solver component(s) :
The solver molecules, on one hand, exhibit strong interaction with the polymer molecules, on the other hand, they show interactions with the non-solver molecules.
   The non-solver molecules, however, avoid interaction with the polymer molecules.
   The stable situation, obviously, is not the homogeneous molecular distribution over the entire system volume but a limitation of the triangular interactions to a part of the systems volume that is as small as possible and that, therefore, has maximum polymer concentration.
   In this situation the solver molecules are able to abolish the matrix structure of the polymer enabling said polymer to pass into the liquid state, but, the presence of the non-solver molecules prevents a homogeneous distribution over the entire system volume.

The properties of the fluid polymer phase are adjustable by variation of the ratios of the composing components :
. At maximum percentage of a solver component the polymer phase has the lowest viscosity and to some extent exhibits sticky properties.
   The quantity of this percentage depends upon the choice of the components that compose the system.
   In this situation the compacting rate is at a maximum related to the chosen system.
. At maximum percentage of a non-solver component the polymer phase has the highest viscosity but no tendency to stickiness.
   The quantity of this percentage depends upon the choice of the components that compose the system.
   In this situation the compacting rate is at a minimum related to the chosen system.
. It is always possible to find a working range within those limits in which the polymer phase is optimal in respect of compacting rate, pumpability and tendency for the equipment to become filthy.
. The position of working range and limits are dependent on the temperature at which the method is applied.
   In general at higher temperatures there is a shift towards a higher share of non-solver component(s).

**The invention has the following advantages, a. o. :**
A In respect of the solvent-based systems.
   1. The absorbtion of EPS proceeds in an unaltered fast rate from the first up to the last addition.
   2. A location for compacting can always be disposed of the compacted polystyrene phase at its maximum concentration without the need for total consumption of the liquid first.
   3. A tank-vehicle can, by pushing aside of phases and with the use of only one tank compartment, withdraw the polystyrene phase and add back the make-up of compacting liquid at the same time and vice versa.
   4. A compacting unit is preferably provided with a sieve on which the EPS is dumped.
      The compacted polystyrene phase sinks through the mesh while the coarse contaminations remain on top of the sieve without degenerating to a sticky mass.
   5. The polystyrene concentration being at a maximum ensures that in the connected processing the amount of liquid to be recovered is at a minimum.
   6. The stickiness of the compacted mass being at a minimum is advantageous in the performing of the method, the connected transport and the further processing of the said mass.
B. In respect of mechanical systems..
   7. The compacted polystyrene phase has good pumpability and can be withdrawn from solid contaminations by filtering.
   8. Blowing agents, whenever present, can be solved in the polystyrene phase and thus keep out of the environment.
C. In general.
   9. The invention makes possible a wide choice of the composing components, depending upon the market situation in respect of availability of components, the scale of performing the compacting method, the level of fire risk, operative environmental and safety requirements and the kind of the further processing of the compacted mass.
   10. The compacted mass is suitable for physical processing to PS as well as for chemical processing to styrene monomer and other chemical materials.
   11. By a suitable choice of the composing components of the liquid phase these components can be recovered simply and nearly completely in the processing as aimed at sub 10..

The purpose of the invention shall be illustrated in the following examples :

### EXAMPLES :

### Example 1 :

Concerns the known effect of true solvents in respect of EPS.
To 100 gr methylethylketone, EPS is added.
At first the EPS is absorbed by the liquid at a very fast rate, but, as the concentration of polystyrene in the solution rises the rate of absorbtion slows down progressively.
In the end the process stops at 50 -55 gr EPS absorbed.
The highly viscous fluid mass exhibits very sticky properties.
Yet from the first addition of EPS there is the origin of only one homogeneous phase of which the viscosity increases the more EPS is added.
Comparable effects appear when use is made of, e.g., styrene, toluene, ethylacetate, methylisobutylketone, 1,1,1-trichloro-ethane.

### Example 2:

Concerns the known effect of acetone.
To 100 gr acetone of technical quality, EPS is added.
The EPS is absorbed at a very fast rate, but, at present no homogeneous solution is obtained but a 2-phase system including in one phase, a compact fluid polystyrene-rich phase with highly viscous but nevertheless well fluid properties and a second phase, a polystyrene-lean liquid phase that is capable of absorbing EPS undiminished as fast as before.
Since part of the liquid is needed to bring about the fluid polymer-rich phase, the available polymer-lean liquid diminishes as addition of EPS continues.
As soon as all the liquid is used up, a paste is obtained that contains 85 to 90 gr PS. This amount of PS has not been approached by whatever pure solvent system.

### Example 3 (comparative):

Concerns the extreme influence of water in respect of the compacting power of acetone.
1. Acetone without the addition of water.
   This case has been examined in -example 2 -
2. Acetone whose water content is raised to 1.5 %.
   This system is hardly slower and 100 gr liquid absorbs some 80 to 85 gr EPS.
3. Acetone whose water content is raised to 5 %.
   The activity of this system is very slow and the obtained fluid polymer phase has the consistence of a dough that is hardly pumpable.
4. Acetone whose water content is raised to 15 %.
   This system behaves completely inactive.

### Example 4 :

Concerns liquid systems, comprised of 1 solver and 1 non-solver.
1. To 90 gr methylethylketone (a solver), 10 gr water (a non-solver) is added.
   EPS is added to the thus obtained liquid.
   In this case EPS is absorbed in the liquid in a fast rate and a 2-phase system is obtained comprised of a fluid polystyrene-rich phase and a polystyrene-lean liquid phase, completely analogous with - example 2 -.
   The total amount of EPS added, 80 to 85 gr, is comparable to the amount as with - example 2 -.
2. Liquid comprised of 25 % methanol (non-solver) and 75 % methylethylketone (solver) : a 2-phase system is obtained : a fluid polystyrene-rich phase and a polystyrene-lean liquid phase.
3. Liquid comprised of 25 % methanol (non-solver) and 75 % ethylacetate (solver) :
   a 2-phase system is obtained : a fluid polystyrene-rich phase and a polystyrene-lean liquid phase.
4. Liquid comprised of 85 % dioxane (solver) and 15 % water (non-solver) :
   a 2-phase system is obtained : a fluid polystyrene-rich phase and a polystyrene-lean liquid phase.

### Example 5 :

Concerns liquid systems comprised of 1 solver and more than one non-solver.
In al cases a 2-phase system is obtained characterized by a highly concencentrated fluid polystyrene-rich phase and a polystyrene-lean liquid phase to which EPS can be added until all liquid is used up.
1. Liquid comprised of 20 % toluene (solver) and 80 % refined spirit (mixture of saturated aliphatic hydrocarbons with boiling range 107 °C to 138 °C, all of which are non-solvers).
2. Liquid comprised of 20 % 1,1,1-trichloro-ethane (solver) and 80 % refined spirit (mixture of saturated aliphatic hydrocarbons, all of which are non-solvers).
3. Concerned is an example that shows that a **system component**, when in the pure state, **does not necessarily have to be a liquid.**
   To 80 gr refined spirit (mixture of non-solvers) is added 20 gr naphtalene (solver) that has been solved in the refined spirit by heating to 50 °C.
   After cooling to ambient temperature the liquid behaves according the invention.
4. Liquid comprised of 85 wt% refined spirit (non-solvers) and 15 wt% styrene (solver).

### Example 6 :

Concerns systems comprised of more than one non-solver and more than one solver.
All systems are characterized in that 2-phase systems are obtained according to the invention.
1. Liquid comprised of 80 % refined spirit (non-solvers) and 20 % Shellsol A (a mixture of hydrocarbons that comprises of aromatics for 98 % and which aromatics all belong to the solvers).
   Shellsol A has a boiling range from 166 °C to 185 °C.
2. Liquid comprised of 40 % Shellsol A (98 % aromatics, all solvers) and 60 % white spirit D (comprised of high boiling aliphatic hydrocarbons, all non-solvers).
   White spirit D has a boiling range from 162 °C to 197 °C.

### Example 7 :

Concerns the influence of ratios and temperature in respect of certain systems that are completely composed of hydrocarbons.
1. **Shellsol A** (mainly solvers) **and white spirit D** (totally non-solvers), at which only the ratio is examined.
   In al cases 100 gr liquid absorbs some 90 gr EPS.
   - 35 % solvers and 65 % non-solvers:
      The process proceeds relatively slow and the obtained fluid polystyrene-rich phase exists as a hardly pumpable dough that does not stick.
   - 40 % solvers and 60 % non-solvers :
      The process proceeds faster and the polystyrene-rich phase is better pumpable but still exhibits some tendency of stickiness.
   - 45 % solvers and 55 % non-solvers :
      The system is optimal with respect of compacting rate, pumpability of polymer phase and acceptability of stickiness.
   - 50 % solvers and 50 % non-solvers :
      The system behaves no longer in accordance with the invention :
      a homogeneous 1-phase system is obtained with strong adhesive properties.
2. **The system styrene** (solver) **and refined spirit** (non-solvers) **:**
   - 20 % styrene in refined spirit : the process is extremely fast and the obtained polymer phase has a relatively low viscosity, like a treacle.
   - 10 % styrene in refined spirit : the process proceeds more slowly and the obtained polymer phase is highly viscous, like a paste.
   - 5 % styrene in refined spirit : the process is very slow and the obtained polymer phase has the consistence of a tough dough.
   - 5% styrene but the liquid heated to 50 °C : the process is as fast as in the case of 10 % styrene and the obtained polymer phase has a viscosity comparable to that case.
3. **The system naphtalene** (solver) **and refined spirit** (non-solvers) **:**
   1. 20 % naphtalene and 50 °C : very fast with polymer phase of very low viscosity and highly adhesive.
   2. same as 1. and ambient temperature : less fast and strong, yet good pumpable dough with less stickiness.
   3. 10 % naphtalene and 50 °C : very fast and better quality paste as with 1.
   4. same as 3. and ambient temperature : slow process and tough dough.
   5. 5 % naphtalene and 50 °C : fast process and sturdy paste with low stickiness.
   6. same as 5. and ambient temperature : very slow process and very tough dough, less useful system to perform the method.

### Example 8 :

In this case a variant of the method is concerned in which a liquid according to the invention, and comprised of hydrocarbons, is emulgated in water.
To a liquid according to the invention, comprised of 20 gr Shellsol A and 80 gr refined spirit, 20 gr oleic acid is added.
While stirring this mixture is added to 300 gr water in which sufficient spirit of ammonia is present to build a stable yet non-foaming emulsion.
The thus obtained emulsion is more fire-safe then the use of pure hydrocarbon mixtures and also absorbs EPS in that a milky-white homogeneous emulsion is obtained comprised of a countless number of microscopic systems, that act according to the invention.
The milky-white emulsion can be charged with EPS to saturation and nevertheless remains of low viscosity.
After charge the emulsion is broken by neutralising the system with diluted hydrochloric acid.
After a first coalescence that leads to a separation in a water phase and an organic phase, the latter again shows a phenomenon of coacervation in that the highly concentrated fluid polymer-rich phase separates from the polymer-lean organic phase.
This organic phase doesn't absorb any additional EPS and again can be emulgated with water containing ammonia.
Apparently the oleic acid molecules with the saturated aliphatics have created a phase that is widely disposed of aromatics.
When the aromatic content of this phase is adjusted the emulsion again behaves in accordance with the invention.

### Example 9 :

Concerned are liquids according to the invention in which acetone is used as auxilliary fluid.
In all cases a 2-phase system is obtained characterized by a highly concencentrated fluid polymer phase and a polymer lean liquid phase to which EPS can be added until all liquid is used up.
1. Liquid comprised of 50 % isopropanol (non-solver), 20 % toluene (solver) and 30 % acetone.
2. Liquid comprised of 50 % refined spirit (non-solvers), 20 % toluene (solver) and 30 % acetone.

### Example 10 :

Concerned is the transport of fluid polystyrene-rich mass and compacting liquid in one and the same tank compartment.
In general the polymer phases obtained according the invention have a higher density than the compacting liquid itself, causing the fluid polymer phase to collect at the bottom of a tank compartment.
This fact offers the opportunity to use only 1 tank compartment to transport both compacting liquid and fluid polymer phase :
A transport **container**, total volume 30 ltr, is filled with 15 ltr compacting liquid.
   Next a collecting tank, having a storage of paste on its bottom, is connected to this **container** and well in such a way that both bottoms are communicating.
   At that the transport **container** is provided with a so called "floating inlet" that enables the compacting liquid to be transferred by pumping to the collecting tank in that the level of the suction inlet is automatically adapted to the liquid level in the transport **container**.
   Then the fluid polymer phase in the collecting tank is transferred by pumping to the transport **container** while at the same time a fresh supply of compacting liquid is transferred from transport **container** to collecting tank in an amount that compensates for the liquid withdrawn with the paste.

### Example 11 :

Concerns the processing of the obtained compacted mass to polystyrene (PS).
20 kg of the polymer paste obtained in - example 5, sub 1 - is sucked in by a screw pump and pressed through a filtering unit.
Next, the mass is transferred to a vacuum chamber by a conveyor screw during which passage the temperature of the mass is raised to over the melting temperature of PS, in order to degas the mass.
The sucked off gases are condensed to recover the liquid.
Next the degassed polymer is withdrawn from the degassing chamber by an extrusion screw and processed to granules for injection molding via pressing through a strandforming die.

## Claims

1. A method of compacting expanded polystyrene in which the expanded polystyrene is brought into contact with a compacting liquid, said liquid having the property to convert the expanded polystyrene into a compact fluid mass, said mass being rich in polystyrene and distinguishing itself from the compacting liquid as a separate and immiscible phase,
**characterized in**,
that the compacting liquid is composed of a component with solving power in respect of polystyrene and a component without solving power in respect of polystyrene,
wherein
a component with solving power in respect of polystyrene is defined as a component that, if in the liquid state, weakens the bonds between the molecules of submerged polystyrene in such a way that these molecules lose there mutual coherence and,
as a final consequence, a one-phase system arises with fluid properties, in which these molecules are homogeneously dispersed over the entire system volume
and
a component without solving power in respect of polystyrene is defined as a component that, if in the liquid state, is not capable to weaken the bonds between the molecules of a submerged polymer in such a way that these molecules loose their mutual coherence and, as a final consequence, and after prolonged time, a 2-phase system remains that is comprised of an inactive liquid phase and an unaltered solid phase that may be somewhat swollen at the most due to the imbibition of molecules of the liquid in the polymer matrix,
wherein acetone alone is excluded as said component with solving power in respect of polystyrene,
wherein said component with solving power in respect of polystyrene preferably is selected from the group consisting of
an aromatic hydrocarbon constituted of 1, 2, 3 or 4 benzene rings and homologues thereof;
an aromatic compound with substitution in the nucleus or side chain;
an aromatic compound with keto-, ether- or esterstructure;
a heterocyclic compound with one or more oxygen atoms in the ring;
an alicyclic compound;
an aliphatic ketone, ether or ester;
an aliphatic unsaturated compound; and
a halogenated hydrocarbon,
and
said component without solving power in respect of polystyrene preferably is selected from the group consisting of
water,
an aliphatic saturated monohydric alcohol,
and
an aliphatic saturated hydrocarbon.

2. The method of claim 1,
**characterized in**,
that said compacting liquid comprises 1 to 99.9 % by weight of said component with solving power in respect of polystyrene.

3. The method of claim 1,
**characterized in**,
that said compacting liquid comprises hydrocarbons and in which one or more of the components with solving power in respect of polystyrene is selected from the group consisting of an aromatic and an alicyclic hydrocarbon while one or more of the components without solving power in respect of polystyrene is an aliphatic hydrocarbon.

4. The method of claim 1,
**characterized in**,
that said compacting liquid is emulsified in water such that when the resulting emulsion is brought into contact with the expanded polystyrene, the expanded polystyrene becomes absorbed by the emulsion and the emulsion is broken up such that the fluid polymer rich phase becomes separated from the polymer lean liquid phase.

5. The method of claim 1,
**characterized in**,
that the compacting liquid comprises acetone as a further component.

6. A compacted mass produced according to the method of claim 1.

7. A method of transporting the compacted mass of claim 6,
comprising carrying a 2-phase system consisting of the compacted mass and a liquid composed of a component with solving power in respect of polystyrene an a component without solving power in respect of polystyrene in a tank compartment of a **means of conveyance**.

8. A method of producing polystyrene comprising the steps of filtering the compacted mass claimed in claim 6 and degassing the filtered compacted mass.

9. A method of producing styrene monomer comprising the steps of pyrolizing the compacted mass claimed in claim 6 to produce a pyrolysis oil and distilling said pyrolysis oil to produce a styrene fraction.

## Patentansprüche

1. Eine Methode zum Verdichten von geschäumtem Polystyrol, bei der das geschäumte Polystyrol in Berührung mit einer Verdichtungsflüssigkeit gebracht wird, wobei diese Flüssigkeit die Eigenschaft hat, das geschäumte Polystyrol in eine kompakte flüssige Masse umzuwandeln; diese Masse ist polystyrolreich und unterscheidet sich von der Verdichtungsflüssigkeit als getrennte und unvermischbare Phase;
**gekennzeichnet durch die Eigenschaft,**
dass die Verdichtungsflüssigkeit aus einer Komponente mit Polystyrol-Lösungsfähigkeit besteht sowie einer Komponente ohne Polystyrol-Lösungsfähigkeit;
wobei
eine Komponente mit Polystyrol-Lösungsfähigkeit als Komponente definiert wird, durch die - sofern sie im flüssigen Zustand ist - die Verbindungen zwischen den Molekülen von eingetauchtem Polystyrol derart geschwächt werden, dass die Moleküle ihren gegenseitigen Zusammenhalt verlieren, wobei schließlich ein einphasiges System mit flüssiger Beschaffenheit entsteht, in welchem diese Moleküle homogen über das gesamte Systemvolumen verteilt sind;
und
eine Komponente ohne Polystyrol-Lösungsfähigkeit als Komponente definiert wird, durch die - sofern sie im flüssigen Zustand ist - die Verbindungen zwischen den Molekülen von eingetauchtem Polystyrol nicht derart geschwächt werden können, dass die Moleküle ihren gegenseitigen Zusammenhalt verlieren, wobei schließlich nach einem längeren Zeitraum ein zweiphasiges System bleibt, das aus einer inaktiven flüssigen Phase sowie einer unveränderten festen Phase besteht, die höchstens aufgrund der Imbibition der Moleküle der Flüssigkeit in der Polymermatrix etwas aufgebläht sein kann;
wobei nur Aceton als Komponente ausgeschlossen wird, durch die Polystyrol gelöst werden kann;
wobei eine Komponente mit Polystyrol-Lösungsfähigkeit vorzugsweise aus folgender Gruppe auszuwählen ist:
ein aromatisches Kohlenwasserstoff, bestehend aus 1, 2, 3 oder 4 Benzolringen und zugehörigen Homologen,
eine aromatische Verbindung mit Substitution im Kern oder in der Seitenkette,
eine aromatische Verbindung mit Keto-, Ether- und Esterstruktur,
eine heterozyklische Verbindung mit einem oder mehreren Sauerstoffatomen im Ring,
eine alizyklische Verbindung,
ein aliphatisches Keton, Ether oder Ester,
eine aliphatische ungesättigte Verbindung sowie
ein halogeniertes Kohlenwasserstoff;
und
die Komponente ohne Polystyrol-Lösungsfähigkeit vorzugsweise aus folgender Gruppe auszuwählen ist:
Wasser,
ein aliphatischer gesättigter monohydrischer Alkohol
und
ein aliphatisches gesättigtes Kohlenwasserstoff.

2. Die Methode aus Patentanspruch 1,
**gekennzeichnet durch die Eigenschaft,**
dass die Verdichtungsflüssigkeit 1 - 99,9 % des Gewichts der Komponente mit Polystyrol-Lösungsfähigkeit entspricht.

3. Die Methode aus Patentanspruch 1,
**gekennzeichnet durch die Eigenschaft,**
dass die Verdichtungsflüssigkeit Kohlenwasserstoffe enthält, wobei eine oder mehrere der Komponenten mit Polystyrol-Lösungsfähigkeit aus der Gruppe ausgewählt wird bzw. werden, die aus einem aromatischen und einem alizyklischen Kohlenwasserstoff besteht, während eine oder mehrere der Komponenten ohne Polystyrol-Lösungsfähigkeit ein aliphatisches Kohlenwasserstoff ist bzw. sind.

4. Die Methode aus Patentanspruch 1,
**gekennzeichnet durch die Eigenschaft,** dass die Verdichtungsflüssigkeit in Wasser emulgiert wird, so dass das geschäumte
Polystyrol, sobald es in Berührung mit der entstandenen Emulsion kommt, von der Emulsion absorbiert wird und die Emulsion aufgeteilt wird, wobei die flüssige polymerreiche Phase von der polymerarmen flüssigen Phase getrennt wird.

5. Die Methode aus Patentanspruch 1
**gekennzeichnet durch die Eigenschaft,**
dass die Verdichtungsflüssigkeit Aceton als weitere Komponente enthält.

6. Eine verdichtete Masse, die gemäß der Methode aus Patentanspruch 1 hergestellt wird.

7. Eine Methode für den Transport der verdichteten Masse aus Patentanspruch 6 zum Befördern eines zweiphasigen Systems, bestehend aus der verdichteten Masse und einer Flüssigkeit, bestehend aus einer Komponente mit Polystyrol-Lösungsfähigkeit sowie einer Komponente ohne Polystyrol-Lösungsfähigkeit in den Tank eines Transportmittels.

8. Eine Methode für die Herstellung von Polystyrol, bestehend aus den Schritten des Filterns der verdichteten Masse, die in Patentanspruch 6 beansprucht wird, und des Entgasens der gefilterten verdichteten Masse.

9. Eine Methode für die Herstellung von Styrol-Monomeren, bestehend aus den Schritten des Pyrolysierens der verdichteten Masse, die in Patentanspruch 6 beansprucht wird, zur Herstellung eines Pyrolyse-Öls und des Destillierens dieses Pyrolyseöls zur Herstellung einer Styrolfraktion.

## Revendications

1. Une méthode pour compacter du polystyrène expansé, dans lequel le polystyrène expansé est mis en contact avec un liquide de compactage, ledit liquide ayant la propriété de convertir le polystyrène expansé en une masse liquide compacte, ladite masse étant riche en polystyrène et se distinguant du liquide de compactage comme une phase immiscible et distincte,
est caractérisée par ;
un liquide de compactage constitué d'un composant ayant un pouvoir solvant par rapport au polystyrène et un composant sans pouvoir solvant par rapport au polystyrène dans lequel
le composant avec le pouvoir solvant par rapport au polystyrène est défini comme un composant qui, dans l'état liquide affaiblit les liaisons entre les molécules du polystyrène submergé de telle façon que ces molécules perdent leur cohérence mutuelle et par conséquence un système monophasé surgit ayant les propriétés fluides dans lequel ces molécules sont dispersées d'une façon homogène dans le volume tout entier
et
un composant sans pouvoir solvant par rapport au polystyrène, défini comme un composant qui, dans l'état liquide, n'est pas capable d'affaiblir les liaisons entre molécules d'un polymère submergé de telle façon que les molécules perdent leur cohérence mutuelle, et que, par conséquence et après un temps prolongé, le système reste bi-phasé, c'est à dire, constitué d'une phase liquide inactive puis une phase solide inaltérée qui peut-être quelque peu gonflée, tout au plus par l'imbibation des molécules du liquide dans la matrice du polymère dans lequel seulement l'acétone est exclu comme le composant solvant par rapport au polystyrène.
Dans lequel ledit composant avec pouvoir solvant par rapport au polystyrène est choisi de préférence dans le groupe composé de :
un hydrocarbone aromatique constitué par 1,2,3, ou 4 anneaux de benzène ou des homologues;
un composant aromatique avec substitution dans le noyeau ou la chaîne de côté;
un composant aromatique avec une keto-, éther-, ou esterstructure;
un composant hétérocyclique avec un ou plusieurs atomes d'oxygène dans l'anneau;
un composant alicyclique;
un ketone, éther, ou ester aliphatique;
un composant nonsaturé aliphatique; et
un hydrocarbone halogéné,
et
ledit composant sans pouvoir solvant par rapport au polystyrène choisi de préférence dans le poupe composé de;
de l'eau,
un alcool monohydrique saturé aliphatique,
et
un hydrocarbone saturé aliphatique.

2. La méthode de l'item 1
est caractérisée par :
ledit liquide compactant constituant de 1 à 99.9 % du poids dudit composant ayant le pouvoir solvant par rapport au polystyrène.

3. La méthode de l'item 1
est caractérisée par :
ledit liquide de compactage comprenant des hydrocarbones dans lequel un ou plusieurs des composants avec un pouvoir solvant par rapport au polystyrène est choisi dans le poupe constitué par un hydrocarbone alicyclique et aromatique alors qu'un ou plusieurs des composants sans pouvoir solvant par rapport au polystyrène est un hydrocarbone aliphatique.

4. La méthode de l'item 1
est caractérisée par :
ledit liquide de compactage émulsifié dans l'eau de sorte que lorsque l'émulsion qui en résulte entre en contact avec le polystyrène compacté, celui-ci est absorbé par l'émulsion et est dissolu de façon à ce que la phase riche en polymère fluide se sépare de la phase liquide pauvre en polymère.

5. La méthode de l'item 1
est caractérisée par :
un liquide de compactage comprenant de l'acétone en tant que composant supplémentaire.

6. Une masse compactée produite selon la méthode de l'item 1.

7. Un moyen de transporter la masse compactée de l'item 6, c'est à dire, le transport d'un système bi-phasé composé de la masse compactée puis un liquide constitué d'un composant avec un pouvoir solvant par rapport au polystyrène et un composant sans pouvoir solvant par rapport au polystyrène, le tout dans le citerne d'un véhicule de transport.

8. Un moyen de produire du polystyrène en filtrant la masse compactée décrite dans l'item 6 puis en dégasant la masse compactée filtrée.

9. Un moyen de produire un monomère styrène en pyrolisant la masse compactée décrite dans l'item 6 pour produire une huile de pyrolyse et en distillant ladite huile de pyrolyse pour obtenir une fraction de styrène.
